# EUROPEAN PATENT SPECIFICATION

(11) **EP 3 031 626 B1**
(45) Date of publication and mention of the grant of the patent: **25.04.2018**
(21) Application number: 15195273.6
(22) Date of filing: 19.11.2015
(51) Int. Cl.: B60C 11/12, B60C 11/11, B60C 11/03

(54) **HEAVY DUTY PNEUMATIC TIRE**
SCHWERLASTLUFTREIFEN
PNEU POUR POIDS LOURD

(30) Priority: 09.12.2014 JP 2014249313
(43) Date of publication of application: 15.06.2016
(73) Proprietor: Sumitomo Rubber Industries, Ltd., Kobe-shi, Hyogo-ken (JP)
(72) Inventor: TODOROKI, Daisuke, Kobe-shi, Hyogo 651-0072 (JP)
(74) Representative: Manitz Finsterwald Patentanwälte PartmbB

(56) References cited:
- EP-A1- 2 586 626
- JP-A- 2003 118 321
- JP-A- 2007 153 275
- JP-A- 2009 190 677
- JP-A- 2013 001 287

## Description

### Technical Field

The present invention relates to a heavy duty pneumatic tire capable of exerting excellent ice performance and wear resistance. The features of the preamble of the independent claim are known from EP 2 586 626 A1.

### Background Art

The following patent document 1 proposes a heavy duty pneumatic tire provided in the tread portion with blocks divided into block pieces. The block of the pneumatic tire according to the patent document 1 is split by two splitting sipes extending in the tire axial direction into a central block piece and a pair of outside block pieces on both sides thereof in the tire circumferential direction. Each of the block pieces is flexibly deformed when contacting with road surface, and the edges of the block piece scratch the road surface, therefore, the frictional force on the ice is increased.

In the pneumatic tire according to the patent document 1, however, each of the outside block pieces is provided with an open sipe at least one end of which is opened at the edge of the block. If such open sipe is formed on the outside block pieces of a middle block applied by a relatively high ground pressure, the block tends to wear unevenly.

### [Prior art document]

### [Patent document]

[Patent document 1] Japanese Patent Application Publication No.2009-190677.

### Summary of the Invention

### Problems to be resolved by the Invention

The present invention was made with the view toward the above-mentioned actual circumstances, and a primary object of the present invention is to provide a heavy duty pneumatic tire capable of exerting excellent ice performance and wear resistance.

### Means of solving the Problems

The present invention, as defined in the independent claim, is a heavy duty pneumatic tire provided in the tread portion with shoulder main grooves extending continuously in the tire circumferential direction in a zigzag form on the tread edge side, and a center main groove extending continuously in the tire circumferential direction in a zigzag form on the axially inside of the shoulder main grooves, so as to define shoulder land regions axially outside the shoulder main grooves, and middle land regions between the shoulder main grooves and the center main groove, wherein
the shoulder land regions comprise shoulder blocks divided by shoulder sub grooves extending continuously in the tire circumferential direction and having a groove width less than that of the shoulder main grooves, and shoulder lateral grooves extending in the tire axial direction,
the middle land regions comprise middle blocks divided by middle sub grooves extending continuously in the tire circumferential direction and having a groove width less than that of the shoulder main grooves, and middle lateral grooves extending in the tire axial direction,
at least one of the shoulder blocks and at least one of the middle blocks are each divided by two splitting sipes extending across the block in the tire axial direction into a central block piece and a pair of outside block pieces on both sides thereof in the tire circumferential direction,
each of the outside block pieces of the middle blocks is provided with a closed sipe whose both ends are terminates within the concerned outside block piece, and
each of the outside block pieces of the shoulder blocks is provided with an open sipe whose at least one end is connected to the shoulder main groove or the shoulder sub groove.

According to the invention, the closed sipe has an oblique part inclined with respect to the tire axial direction, and a pair of outside parts continued from both ends in the tire axial direction of the oblique part, an angle of the oblique part with respect to the tire axial direction is not less than 15 degrees and not more than 25 degrees.
In the heavy duty pneumatic tire according to the present invention, it is preferable that the splitting sipe comprises, in a cross section perpendicular to its length direction, a main portion extending in the tire radial direction with a constant width excluding a bottom part, and an opening portion whose width is increased in the form of a step on the outside of the main portion in the tire radial direction.

In the pneumatic tire according to the present invention, it is preferable that the shoulder sub groove extends in a zigzag form, and the middle sub groove extends in a straight form.

In the heavy duty pneumatic tire according to the present invention, it is preferable that
the shoulder blocks include first shoulder blocks defined between the shoulder main grooves and the shoulder sub grooves, and second shoulder blocks defined axially outside the shoulder sub grooves,
the open sipes include first open sipes disposed on the first shoulder blocks and connected to the shoulder sub grooves, and second open sipes disposed of the second shoulder blocks and connected to the shoulder sub grooves, and
the second open sipes smoothly continue to the first open sipes through the shoulder sub grooves.

In the heavy duty pneumatic tire according to the present invention, it is preferable that
the first open sipes are arranged at intervals in the tire circumferential direction and the second open sipes are arranged at intervals in the tire circumferential direction,
the first open sipes and the second open sipes each comprise an oblique part inclined with respect to the tire axial direction,
the oblique part of each first open sipe is inclined oppositely to the oblique part of the circumferentially adjacent first open sipe, and
the oblique part of each second open sipe is inclined to the same direction as the oblique part of the circumferentially adjacent second open sipe.

### Effects of the Invention

In the heavy duty pneumatic tire according to the present invention, the shoulder land regions comprise the shoulder blocks divided by the shoulder sub grooves extending continuously in the tire circumferential direction and having the groove width less than that of the shoulder main grooves, and shoulder lateral grooves extending in the tire axial direction.
The middle land regions comprise the middle blocks divided by the middle sub grooves extending continuously in the tire circumferential direction and having the groove width less than that of the shoulder main grooves, and the middle lateral grooves extending in the tire axial direction.

The at least one of the shoulder blocks and the at least one of the middle blocks are each divided by the two splitting sipes extending across the block in the tire axial direction into the central block piece and a pair of the outside block pieces on both sides thereof in the tire circumferential direction. During running on the ice, each block piece is flexibly deformed, and the edge of each block piece effectively scratches the road surface. Accordingly, excellent ice performance is exerted.

Each of the outside block pieces of the middle blocks is provided with the closed sipe whose both ends are terminated within the outside block piece. Such closed sipe helps to control uneven wear of the middle blocks which are liable to be subjected to relatively high ground pressure.

Each of the outside block pieces of the shoulder blocks is provided with the open sipe at least one end of which is connected to the shoulder main groove or shoulder sub groove. Such open sipe helps to improve the ice performance.
Further, in the shoulder blocks having such outside block pieces and also in the above-mentioned middle blocks, wear progresses uniformly, therefore, uneven wear of the tread portion is effectively prevented.

As explained above, the heavy duty pneumatic tire according to the present invention can exert excellent ice performance and wear resistance.

### Brief Description of the Drawings

Fig. 1 is a developed view of the tread portion of a heavy duty pneumatic tire as an embodiment of the present invention.
Fig. 2 is a closeup of the middle land region shown in Fig. 1.
Fig. 3 is a closeup of the first middle block shown in Fig. 2.
Fig. 4 is a cross sectional view of the splitting sipe taken along line A-A of Fig. 3.
Fig. 5 is a closeup of the shoulder land region shown in Fig. 1.
Fig. 6 is a closeup of the first shoulder block shown in Fig. 5.
Fig. 7 is a closeup of the second shoulder block shown in Fig. 5.
Fig. 8 is a cross sectional view of the splitting sipe taken along line B-B of Fig. 7.
Fig. 9 is a developed view of the tread portion of Comparative example.

### Mode for carrying out the Invention

Embodiments of the present invention will now be described in detail in conjunction with the accompanying drawings.

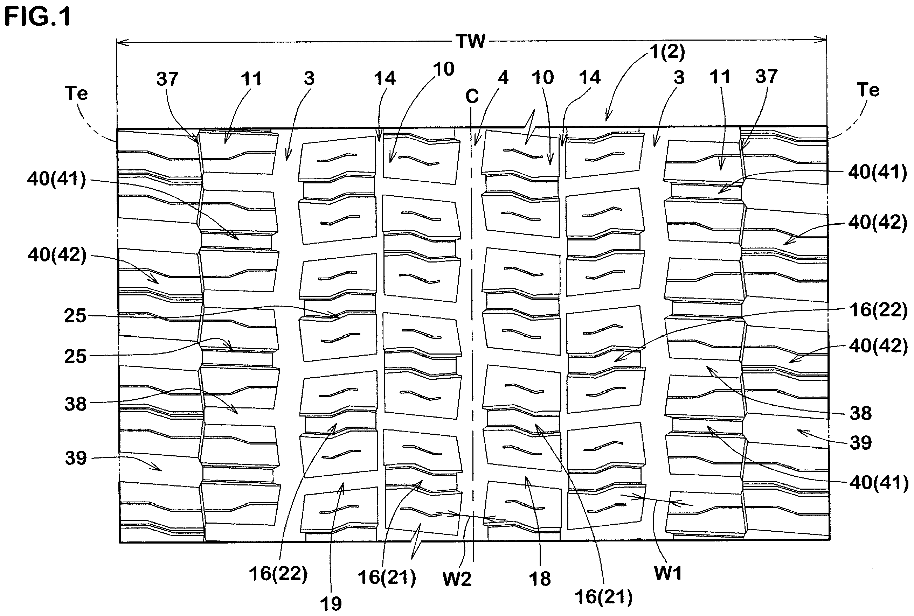

In Fig. 1, there is shown a developed plan view of a tread portion 2 of a heavy duty pneumatic tire in this embodiment (hereinafter may be simply referred to as "the tire") 1. For example, the heavy duty pneumatic tire 1 in this embodiment is suitably used as a tire for winter season.

As shown in Fig. 1, the tread portion 2 of the tire 1 is provided with a pair of shoulder main grooves 3 and a center main groove 4.

Each of the shoulder main grooves 3 extends continuously in the tire circumferential direction in a zigzag form on the tread edge Te side.
The shoulder main groove 3 may be a groove extending in the tire circumferential direction, for example, in a wavy form or in a straight form.

The "tread edge Te" is the axially outermost ground contacting position when the tire 1 under a regular state in which the tire is mounted on a standard wheel rim (not shown), inflated to a standard inner pressure and loaded with no tire load, is loaded with a standard load and contacted with a flat surface at a camber angle of 0 degree.

The "standard wheel rim" is a wheel rim specified for the tire by a standard included in a standardization system on which the tire is based, for example, the "normal wheel rim" in JATMA, "Design Rim" in TRA, and "Measuring Rim" in ETRTO.

The "standard inner pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The center main groove 4 is disposed axially inside the shoulder main grooves 3. For example, the center main groove 4 is disposed between a pair of the shoulder main grooves 3. In this embodiment, a single center main groove 4 is disposed on the tire equator C for example. For example, a pair of the center main grooves 4 may be disposed one on each side of the tire equator C.

The center main groove 4 extends continuously in the tire circumferential direction in a zigzag form. The center main groove 4 may be a groove extending in the tire circumferential direction, for example, in a wavy form or in a straight form.

It is preferable that the width W1 of the shoulder main groove 3 and the groove width w2 of the center main groove 4 are in a range of from 3.0 % to 5.0 % of the tread width TW for example.
The tread width TW is the distance in the tire axial direction between the tread edges Te of the tire 1 under the regular state.

In the case of the heavy duty pneumatic tire, it is preferable that the groove depths of the shoulder main grooves 3 and the center main grooves 4 are in a range of from 8 to 15 mm for example.

By providing the above-mentioned shoulder main grooves 3 and center main groove 4 in the tread portion 2, there are defined middle land regions 10 between the shoulder main grooves 3 and the center main groove 4 and shoulder land regions 11 axially outside the shoulder main grooves 3.

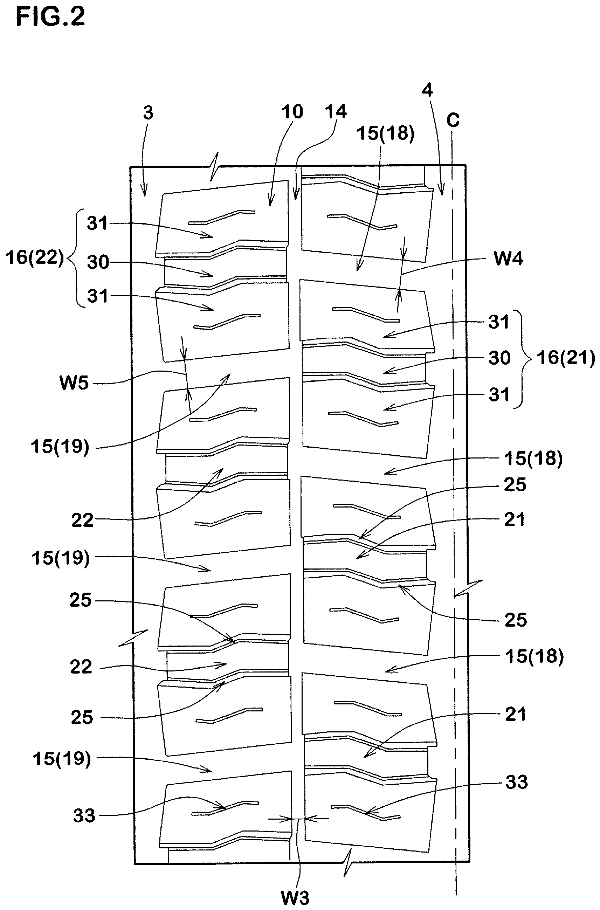

In Fig. 2, there is shown a closeup of the middle land region 10 in Fig. 1. As shown in Fig. 2, the middle land region 10 includes middle blocks 16 divided by a middle sub groove 14 extending in the tire circumferential direction and middle lateral grooves 15 extending in the tire axial direction.

The middle sub groove 14 extends continuously in the tire circumferential direction between the shoulder main groove 3 and the center main groove 4. The middle sub groove 14 has a groove width w3 less than those of the shoulder main groove 3 and the center main groove 4. For example, the groove width w3 of the middle sub groove 14 is 0.2 to 0.35 times the groove width W1 (shown in Fig. 1) of the shoulder main groove 3.

For example, the middle sub groove 14 extends in the tire circumferential direction in a straight form. The middle sub groove 14 may be a groove extending, for example, in a zigzag form or in a wavy form.

For example, the middle lateral grooves 15 include first middle lateral grooves 18 connecting between the center main groove 4 and the middle sub groove 14, and
second middle lateral grooves 19 connecting between the middle sub groove 14 and the shoulder main groove 3.
The first middle lateral grooves 18 are arranged at intervals in the tire circumferential direction.
The second middle lateral grooves 19 are arranged at intervals in the tire circumferential direction.

For example, it is preferable that the first middle lateral grooves 18 are sifted in the tire circumferential direction from the second middle lateral grooves 19.
It is desirable that the first middle lateral grooves 18 are arranged in the tire circumferential direction at pitches same as those of the second middle lateral grooves 19, and the second middle lateral grooves 19 are respectively shifted in the tire circumferential direction from the first middle lateral grooves 18 by half pitches. Such first middle lateral grooves 18 and second middle lateral grooves 19 help to control heel-and-toe wear of each block.

It is preferable that the first middle lateral grooves 18 are inclined with respect to the tire axial direction to an opposite direction to the second middle lateral grooves 19. Such first middle lateral grooves 18 and second middle lateral grooves 19 exert frictional force multi-directionally, and are especially helpful to reduce an axial force acting on the tire during running (hereinafter may be referred to as "conicity force").

For example, the groove width w4 of the first middle lateral groove 18 and the groove width w5 of the second middle lateral groove 19 are preferably set in a range of from 0.60 to 0.75 times the groove width W1 of the shoulder main groove 3. Such first middle lateral groove 18 and second middle lateral groove 19 improve the steering stability on dry road surface and the wet performance in good balance.

For example, The middle blocks 16 include first middle blocks 21 and second middle blocks 22. The first middle blocks 21 are divided by, for example, the center main groove 4, the middle sub groove 14 and the first middle lateral grooves 18. The second middle blocks 22 are divided by, for example, the middle sub groove 14, the shoulder main groove 3 and the second middle lateral grooves 19.
The first middle blocks 21 are arranged in the tire circumferential direction at intervals, and the second middle blocks 22 are arranged in the tire circumferential direction at intervals.

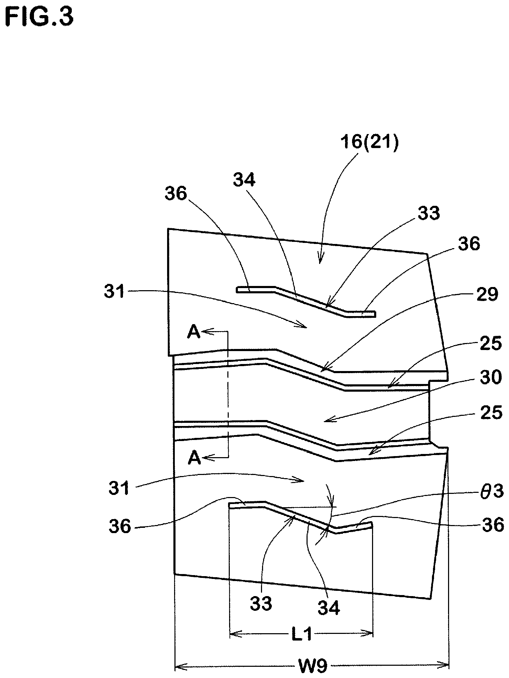

In Fig. 3, there is shown a closeup of the first middle block 21 for explaining the configuration of the middle block 16. As shown in Fig. 3, the middle block 16 is provided with two splitting sipes 25 extending across the block in the tire axial direction.
In this specification, the "sipe" means a cut whose width is not more than 2 mm.

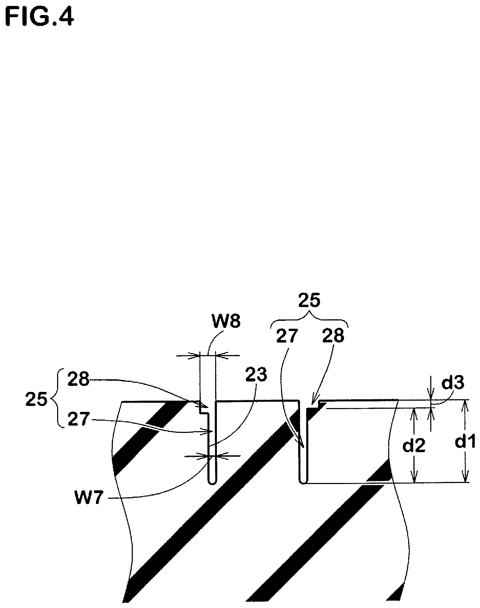

In Fig. 4, there is shown a cross sectional view of the splitting sipe 25 taken along line A-A of Fig. 3. For example, as shown in Fig. 4, the splitting sipe 25 has a groove depth d1 of from 5 to 10 mm.

For example, the splitting sipe 25 comprises a main portion 27 extending in the tire radial direction with a constant width excluding a bottom part, and an opening portion 28 whose width is increased in the form of a step on the radially outside of the main portion 27.

For example, the width w7 of the main portion 27 is 0.3 to 1.0 mm. For example, the depth d2 of the main portion 27 is 4.0 to 9.5 mm.

For example, the width w8 of the opening portion 28 is 0.5 to 1.5 mm. For example, the depth d3 of the opening portion 28 is 0.5 to 1.5 mm. In this embodiment, the opening portion 28 is formed by widening only one of the sipe walls 23 for example.

The splitting sipes 25 having such main portion 27 and opening portion 28 effectively absorb water on the road surface during running on the ice, and the tire exerts excellent ice performance.

For example, as shown in Fig. 3, the splitting sipe 25 has a central portion 29 inclined with respect to the tire axial direction. Such splitting sipe 25 exerts a frictional force in the tire axial direction too by the edges.

By the above-mentioned two splitting sipes 25, the middle block 16 is divided into a central block piece 30 and a pair of outside block pieces 31. The central block piece 30 is formed between the splitting sipes 25. The outside block pieces 31 are formed on both sides of the central block piece 30 in the tire circumferential direction.

For example, the central block piece 30 of the middle block 16 is formed as a plain block piece not provided with any cuts such as sipe.

The outside block piece 31 of the middle block 16 is provided with a closed sipe 33 whose both ends are terminated within the outside block piece 31. Such closed sipe 33 helps to control uneven wear of the middle block 16 liable to be subjected to relatively high ground pressure.

The closed sipe 33 has an oblique part 34 inclined with respect to the tire axial direction, and a pair of outside parts 36 continued from both ends in the tire axial direction of the oblique part 34.

For example, the oblique part 34 of the closed sipe 33 is inclined to the same direction as the central portions 29 of the splitting sipes 25.
The angle θ3 of the oblique part 34 with respect to the tire axial direction is not less than 15 degrees, preferably not less than 18 degrees, and not more than 25 degrees, preferably not more than 22 degrees. Such oblique part 34 exerts a frictional force in the tire axial direction too and helps to improve the cornering performance on the ice.

For example, the outside part 36 is laid at an angle with respect to the tire axial direction which is less than that of the oblique part 34. The outside part 36 may be, for example, extended along the tire axial direction.

It is desirable that the oblique part 34 and a pair of the outside parts 36 extend along the splitting sipe 25. Such oblique part 34 and the outside parts 36 make the block rigidity distribution even and help to prevent the block from tearing off.

The axial length L1 of the closed sipe 33 is preferably not less than 0.30 times, more preferably not less than 0.45 times, and preferably not more than 0.70 times, more preferably not more than 0.55 times the axial width w9 of the middle block 16. Such closed sipe 33 exerts excellent edge effect while maintaining the rigidity of the block. Therefore, the steering stability on dry road surface and ice performance are improved in good balance.

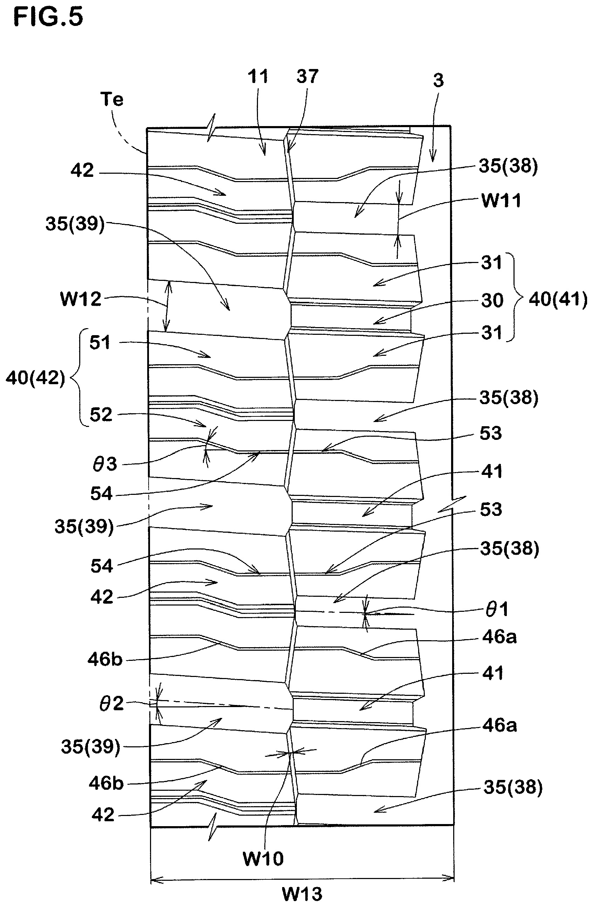

In Fig. 5, there is shown a closeup of the shoulder land region 11 shown in Fig. 1. As shown in Fig. 5, the shoulder land region 11 comprises shoulder blocks 40 divided by a shoulder sub groove 37 extending in the tire circumferential direction and shoulder lateral grooves 35 extending in the tire axial direction.

The shoulder sub groove 37 extends continuously in the tire circumferential direction between the shoulder main groove 3 and the tread edge Te. The shoulder sub groove 37 has a groove width W10 less than those of the shoulder main grooves 3 and the center main groove 4. For example, the groove width W10 of the shoulder sub groove 37 is in a range of from 0.08 to 0.15 times the groove width W1 of the shoulder main groove 3.

For example, the shoulder sub groove 37 extends in the tire circumferential direction in a zigzag form. For example, the shoulder sub groove 37 may be extended in a wavy form or in a straight form.

For example, the shoulder lateral grooves 35 include first shoulder lateral grooves 38 connecting between the shoulder main groove 3 and the shoulder sub groove 37, and second shoulder lateral grooves 39 extending from the shoulder sub groove 37 to the tread edge Te.
The first shoulder lateral grooves 38 are arranged in the tire circumferential direction at intervals, and
the second shoulder lateral grooves 39 are arranged in the tire circumferential direction at intervals.

It is preferable that the first shoulder lateral grooves 38 are shifted in the tire circumferential direction from the second shoulder lateral grooves 39.
It is desirable that the first shoulder lateral grooves 38 are arranged in the tire circumferential direction at pitches same as those of the second shoulder lateral grooves 39, and the second shoulder lateral grooves 39 are respectively sifted in the tire circumferential direction from the first shoulder lateral grooves 38 by half pitches.
Such first shoulder lateral grooves 38 and second shoulder lateral grooves 39 help to control heel-and-toe wear of each block.

The first shoulder lateral grooves 38 and the second shoulder lateral grooves 39 are inclined with respect to the tire axial direction to one direction, for example, at an angle of from 2 to 5 degrees.
It is desirable that the angle θ2 of the second shoulder lateral groove 39 with respect to the tire axial direction is more than the angle θ1 of the first shoulder lateral groove 38 with respect to the tire axial direction.
Such first shoulder lateral grooves 38 and the second shoulder lateral grooves 39 help to lead toward the tread edge Te the water pushed aside by the shoulder land region 11 during running in wet conditions.

For example, the groove width W11 of the first shoulder lateral groove 38 and the groove width w12 of the second shoulder lateral groove 39 are preferably 0.1 to 0.2 times the axial width W13 the shoulder land region 11.

It is desirable that the groove width w12 of the second shoulder lateral groove 39 is more than the groove width W11 of the first shoulder lateral groove 38. For example, the ratio W12/W11 of the groove width w12 of the second shoulder lateral groove 39 and the groove width W11 of the first shoulder lateral groove 38 is 1.60 to 1.75. Such first shoulder lateral groove 38 and the second shoulder lateral groove 39 exert excellent wet performance and wandering performance.

For example, the shoulder blocks 40 include first shoulder blocks 41 and second shoulder blocks 42.
The first shoulder block 41 is divided by, for example, the shoulder main groove 3, the shoulder sub groove 37 and the first shoulder lateral grooves 38.
The second shoulder block 42 is divided by, for example, the shoulder sub groove 37 and the second shoulder lateral grooves 39.
The first shoulder blocks 41 are arranged in the tire circumferential direction at intervals, and
the second shoulder blocks 42 are arranged in the tire circumferential direction at intervals.

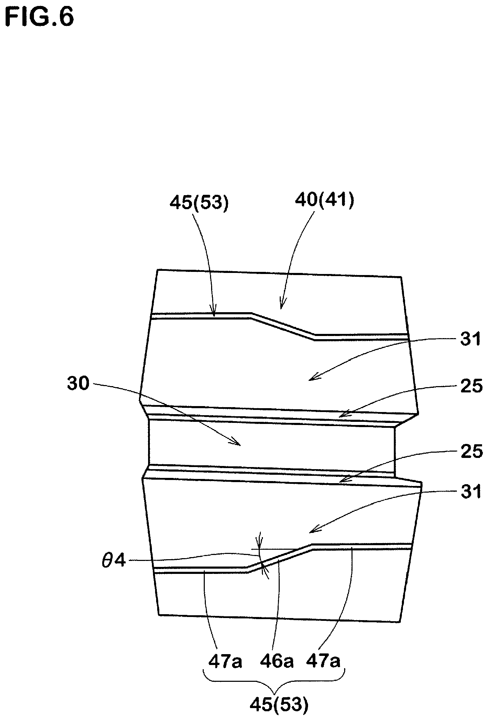

In Fig. 6, there is shown a closeup of the first shoulder block 41 for explaining the configuration of the shoulder block 40. As shown in Fig. 6, similarly to the middle block, the first shoulder block 41 is provided with two splitting sipes 25 extending across the block in the tire axial direction. For example, the splitting sipes 25 disposed on the first shoulder block 41 have cross-sectional shapes same as those of the splitting sipes 25 disposed on the middle block 16 (as shown in Fig. 4).

For example, the splitting sipes 25 disposed on the first shoulder block 41 extend along the tire axial direction in a straight form.

The first shoulder block 41 is divided by the two splitting sipes 25 into a central block piece 30 and a pair of outside block pieces 31.
The central block piece 30 is formed between the splitting sipes 25. The outside block pieces 31 are formed on both sides of the central block piece 30 in the tire circumferential direction.

For example, the central block piece 30 of the first shoulder block 41 is formed as a plain block piece not provided with any cuts such as sipe.

The outside block piece 31 of the first shoulder block 41 is provided with an open sipe 45 whose at least one end is connected to the shoulder main groove 3 or the shoulder sub groove 37.

Such open sipe 45 helps to improve ice performance. Further, in the shoulder block 40 having such outside block piece 31 and also the above-mentioned middle block 16, wear progresses uniformly, therefore, uneven wear of the tread portion is effectively prevented.

In this embodiment, the first open sipe 53 disposed on the outside block piece 31 of the first shoulder block 41 is connected to both of the shoulder main groove 3 and the shoulder sub groove 37.

For example, the first open sipe 53 comprises an oblique part 46a inclined with respect to the tire axial direction, and a pair of outside parts 47a continued from both ends of the oblique part 46a in the tire axial direction and extending along the tire axial direction. Thereby, a frictional force in the tire axial direction is also increased by the edges of the sipe.

The angle θ4 of the oblique part 46a with respect to the tire axial direction is preferably not less than 15 degrees, more preferably not less than 18 degrees, and preferably not more than 25 degrees, more preferably not more than 22 degrees. Such oblique part 46a exerts frictional force in the tire circumferential direction and tire axial direction in good balance.

As shown in Fig. 5, the oblique part 46a of each first open sipe 53 is inclined oppositely to the oblique part 46a of the circumferentially adjacent first open sipe 53. Thereby, the edges exert frictional force multi-directionally, and the conicity force is decreased, and the straight running stability is improved.

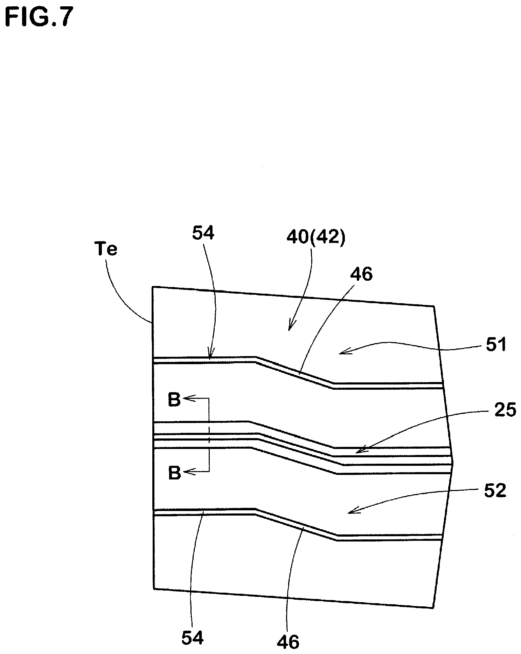

In Fig. 7, there is shown a closeup of the second shoulder block 42. As shown in Fig. 7, the second shoulder block 42 is provided with a single splitting sipe 25.

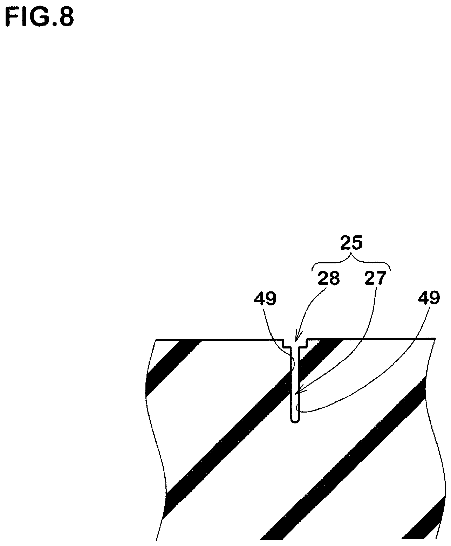

In Fig. 8, there is shown a B-B cross section of the splitting sipe 25 disposed on the second shoulder block 42.

For example, as shown in Fig. 8, in the opening portion 28 of the splitting sipe 25 disposed on the second shoulder block 42, both of the sipe walls 49 widen the width of the sipe in the form of a step. Such splitting sipe 25 has excellent water-absorbing property, and effectively absorbs water on the road surface during running on the ice.

As shown in Fig. 7, by being provided with the above-mentioned single splitting sipe 25, the second shoulder block 42 is divided into a first block piece 51 on one side in the tire circumferential direction, and a second block piece 52 on the other side in the tire circumferential direction.

The first block piece 51 and the second block piece 52 are each provided with a second open sipe 54 whose at least one end is connected to the shoulder sub groove 37. For example, the second open sipe 54 in this embodiment also continues to the tread edge Te. For example, the second open sipe 54 has a shape same as that of the first open sipe 53 disposed on the first shoulder block 41 (shown in Fig. 6).

It is preferable that, for example, as shown in Fig. 5, the second open sipes 54 smoothly continues to the first open sipes 53 through the shoulder sub groove 37. Such first open sipes 53 and second open sipes 54 are increased in the open width when contacting with the ground, and the wet performance and ice performance can be further improved.

The oblique part 46b of the second open sipe 54 is inclined to the same direction as the oblique part 46b of the circumferentially adjacent second open sipe 54. Thereby, the axial rigidities of the second shoulder blocks 42 arranged circumferentially of the tire become uniform, and chipping-off of the blocks near the tread edges Te is prevented.

while detailed description has been made of an especially preferable embodiment of the present invention, the present invention can be embodied in various forms without being limited to the illustrated embodiment

### Working examples

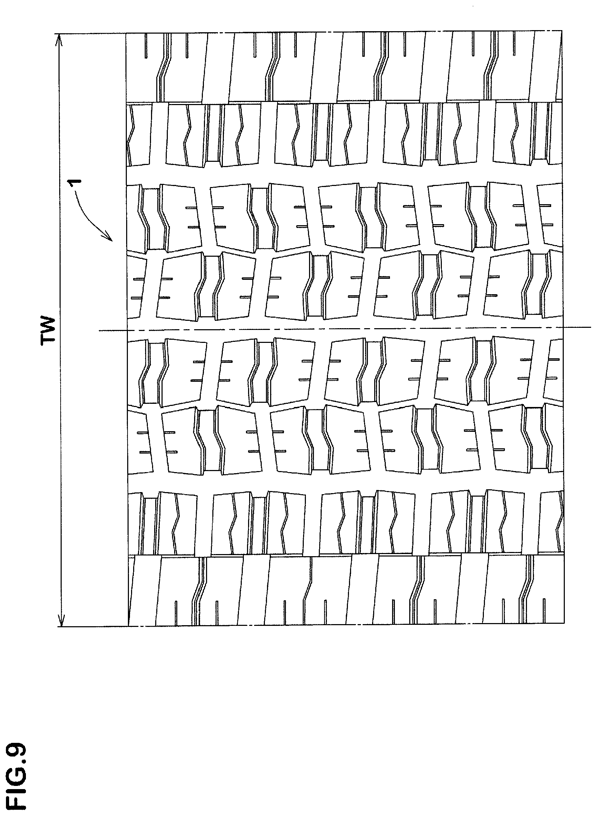

Heavy duty pneumatic tires of size 11R22.5 having the basic pattern shown in Fig. 1 were experimentally manufactured. As comparative example 1, a tire provided with the middle blocks provided with open sipes having one end connected to the middle lateral groove was experimentally manufactured as shown in Fig. 9. Each test tire was tested for the ice performance and wear resistance.
Specifications common to all of the test tires and test methods are as follows.
tire mounting wheel rim: 8.25x22.5
tire inner pressure: 900 kPa
test vehicle: 10 ton truck, a load of 50 % of the loading capacity was placed on a center of the load carrying platform
tire mounting position: all wheels

### < Ice performance >

Running performance on the ice of the above-mentioned test vehicle was sensuously evaluated by the driver. The results are grades based on Embodiment 1 being 100, wherein the larger value means that the ice performance is better.

### <Wear resistance>

After running on a dry road for a fixed distance, the amount of wear of the shoulder blocks was measured. As the results, a reciprocal number of the amount of wear is indicated by an index based on Comparative example 1 being 100, wherein the larger value means that the wear resistance is better.

The test results are shown in Table 1.

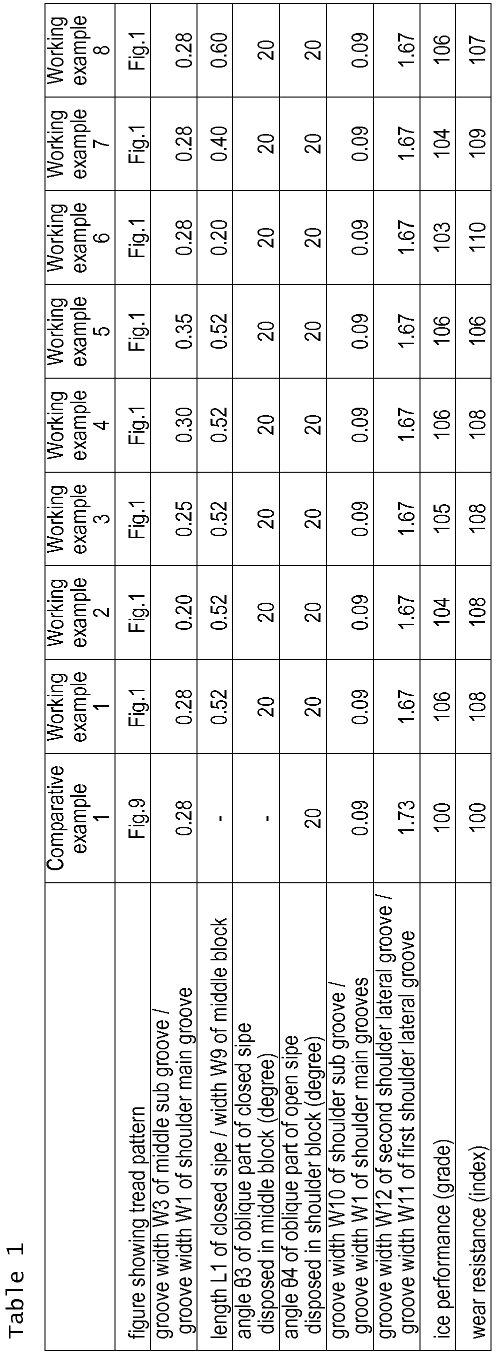

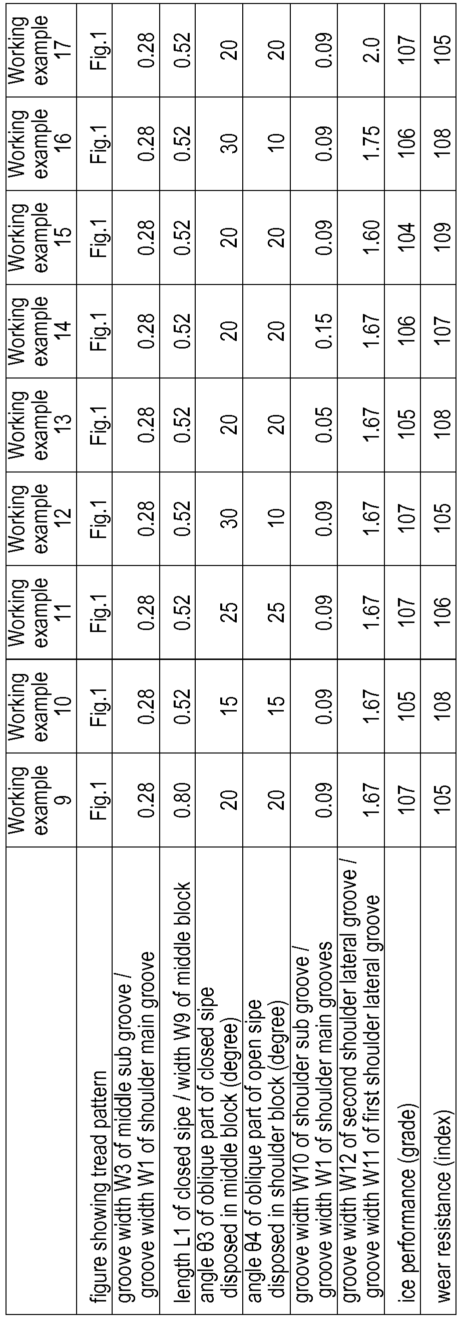

As apparent from Table 1, it was confirmed that the heavy duty pneumatic tires as working examples exerted excellent ice performance and wear resistance.

### Reference Signs List

- 2: tread portion
- 3: shoulder main groove
- 4: center main groove
- 10: middle land region
- 11: shoulder land region
- 14: middle sub groove
- 15: middle lateral groove
- 16: middle block
- 25: splitting sipe
- 30: central block piece
- 31: outside block piece
- 33: closed sipe
- 35: shoulder lateral groove
- 37: shoulder sub groove
- 40: shoulder block
- 45: open sipe

## Claims

1. A heavy duty pneumatic tire provided in a tread portion (2) with shoulder main grooves (3) extending continuously in the tire circumferential direction in a zigzag form on the tread edge side, and a center main groove (4) extending continuously in the tire circumferential direction in a zigzag form on the axially inside of the shoulder main grooves (3) so as to define shoulder land regions (11) axially outside the shoulder main grooves (3), and middle land regions (10) between the shoulder main grooves (3) and the center main groove (4),
the shoulder land regions (11) comprise shoulder blocks (40) divided by shoulder sub grooves (37) extending continuously in the tire circumferential direction and having a groove width less than that of the shoulder main grooves (3), and shoulder lateral grooves (35) extending in the tire axial direction,
the middle land regions (10) comprise middle blocks (16) divided by middle sub grooves (14) extending continuously in the tire circumferential direction and having a groove width less than that of the shoulder main grooves (3), and middle lateral grooves (15) extending in the tire axial direction,
at least one of the shoulder blocks (40) and at least one of the middle blocks (16) are each divided by two splitting sipes (25) extending across the block (40, 16) in the tire axial direction into a central block piece (30) and a pair of outside block pieces (31) on both sides thereof in the tire circumferential direction, and
each of the outside block pieces (31) of the shoulder blocks (40) is provided with an open sipe (45) whose at least one end is connected to the shoulder main groove (3) or the shoulder sub groove (37),
**characterized in that**
each of the outside block pieces (31) of the middle blocks (16) is provided with a closed sipe (33) whose both ends terminate within the concerned outside block piece (31),
the closed sipe (33) has an oblique part (34) inclined with respect to the tire axial direction, and a pair of outside parts (36) continued from both ends in the tire axial direction of the oblique part (34),
an angle (θ3) of the oblique part (34) with respect to the tire axial direction is not less than 15 degrees and not more than 25 degrees.

2. The heavy duty pneumatic tire according to claim 1, wherein the splitting sipe (25) comprises, in a cross section perpendicular to its length direction, a main portion (27) extending in the tire radial direction with a constant width (w7) excluding a bottom part, and an opening portion (28) whose width (W8) is increased in the form of a step on the outside of the main portion (27) in the tire radial direction.

3. The heavy duty pneumatic tire according to claim 1 or 2, wherein the shoulder sub groove (37) extends in a zigzag form, and the middle sub groove (14) extends in a straight form.

4. The heavy duty pneumatic tire according to any one of claims 1-3, wherein the shoulder blocks (40) include first shoulder blocks (41) defined between the shoulder main grooves (3) and the shoulder sub grooves (37), and second shoulder blocks (42) defined axially outside the shoulder sub grooves (37),
the open sipes (45) include first open sipes (53) disposed on the first shoulder blocks (41) and connected to the shoulder sub grooves (37), and second open sipes (54) disposed on the second shoulder blocks (42) and connected to the shoulder sub grooves (37), and
the second open sipes (54) smoothly continue to the first open sipes (53) through the shoulder sub grooves (37).

5. The heavy duty pneumatic tire according to claim 4, wherein
the first open sipes (53) are arranged at intervals in the tire circumferential direction and the second open sipes (54) are arranged at intervals in the tire circumferential direction,
the first open sipes (53) and the second open sipes (54) each comprise an oblique part (46a) inclined with respect to the tire axial direction,
the oblique part (46a) of each first open sipe (53) is inclined oppositely to the oblique part (46a) of the circumferentially adjacent first open sipe (53), and
the oblique part (46b) of each second open sipe (54) is inclined to the same direction as the oblique part (46b) of the circumferentially adjacent second open sipe (54).

## Patentansprüche

1. Schwerlast-Luftreifen, der in einem Laufflächenabschnitt (2) mit Schulterhauptrillen (3), die sich durchgehend in der Umfangsrichtung des Reifens in einer Zickzack-Form auf der Laufflächenkantenseite erstrecken, und einer zentralen Hauptrille (4) die sich durchgehend in der Umfangsrichtung des Reifens in einer Zickzack-Form auf der axialen Innenseite der Schulterhauptrillen (3) erstreckt, versehen ist, um Schulterlandbereiche (11) axial außerhalb der Schulterhauptrillen (3) und mittlere Landbereiche (10) zwischen den Schulterhauptrillen (3) und der zentralen Hauptrille (4) zu definieren,
wobei die Schulterlandbereiche (11) Schulterblöcke (40) umfassen, die durch Schulterunterrillen (37), die sich durchgehend in der Umfangsrichtung des Reifens erstrecken und eine Rillenbreite aufweisen, die kleiner ist als die der Schulterhauptrillen (3), und Schulterquerrillen (35), die sich in der axialen Richtung des Reifens erstrecken, unterteilt sind,
die mittleren Landbereiche (10) mittlere Blöcke (16) umfassen, die durch mittlere Unterrillen (14), die sich durchgehend in der Umfangsrichtung des Reifens erstrecken und eine Rillenbreite aufweisen, die kleiner ist als die der Schulterhauptrillen (3), und mittlere Querrillen (15), die sich in der axialen Richtung des Reifens erstrecken, unterteilt sind,
zumindest einer der Schulterblöcke (40) und zumindest einer der mittleren Blöcke (16) jeweils durch zwei teilende Feinschnitte (25), die sich über den Block (40, 16) in der axialen Richtung des Reifens hinweg erstrecken, in ein zentrales Blockstück (30) und ein Paar außenliegende Blockstücke (31) auf in der Umfangsrichtung des Reifens beiden Seiten davon unterteilt sind, und
jedes der außenliegenden Blockstücke (31) der Schulterblöcke (40) mit einem offenen Feinschnitt (45) versehen ist, dessen zumindest eines Ende mit der Schulterhauptrille (3) oder der Schulterunterrille (37) verbunden ist,
**dadurch gekennzeichnet, dass**
jedes der außenliegenden Blockstücke (31) der mittleren Blöcke (16) mit einem geschlossenen Feinschnitt (33) versehen ist, dessen beide Enden innerhalb des betreffenden außenliegenden Blockstücks (31) enden,
der geschlossene Feinschnitt (33) einen schrägen Teil (34), der mit Bezug auf die axiale Richtung des Reifens geneigt ist, und ein Paar außenliegende Teile (36) aufweist, die sich von beiden Enden in der axialen Richtung des Reifens des schrägen Teils (34) fortsetzen,
ein Winkel (θ3) des schrägen Teils (34) mit Bezug auf die axiale Richtung des Reifens nicht kleiner als 15 Grad und nicht größer ist als 25 Grad.

2. Schwerlast-Luftreifen nach Anspruch 1, wobei der teilende Feinschnitt (25) in einem Querschnitt senkrecht zu seiner Längsrichtung einen Hauptabschnitt (27), der sich in der radialen Richtung des Reifens mit einer konstanten Breite (W7) mit Ausnahme eines Bodenteils erstreckt, und einen Öffnungsabschnitt (28) umfasst, dessen Breite (W8) in der Form einer Stufe an der Außenseite des Hauptabschnitts (27) in der radialen Richtung des Reifens vergrößert ist.

3. Schwerlast-Luftreifen nach Anspruch 1 oder 2, wobei sich die Schulterunterrille (37) in einer Zickzack-Form erstreckt, und die mittlere Unterrille (14) sich in einer geraden Form erstreckt.

4. Schwerlast-Luftreifen nach einem der Ansprüche 1 bis 3, wobei die Schulterblöcke (40) erste Schulterblöcke (41), die zwischen den Schulterhauptrillen (3) und den Schulterunterrillen (37) definiert sind, und zweite Schulterblöcke (42), die axial außerhalb der Schulterunterrillen (37) definiert sind, umfassen,
die offenen Feinschnitte (45) erste offene Feinschnitte (53), die auf den Schulterblöcken (41) angeordnet sind und mit den Schulterunterrillen (37) verbunden sind, und zweite offene Feinschnitte (54), die auf den zweiten Schulterblöcken (42) angeordnet und mit den Schulterunterrillen (37) verbunden sind, umfassen, und
die zweiten offenen Feinschnitte (54) sich sanft zu den ersten offenen Feinschnitten (53) durch die Schulterunterrillen (37) fortsetzen.

5. Schwerlast-Luftreifen nach Anspruch 4, wobei
die ersten offenen Feinschnitte (53) in Intervallen in der Umfangsrichtung des Reifens angeordnet sind, und die zweiten offenen Feinschnitte (54) in Intervallen in der Umfangsrichtung des Reifens angeordnet sind,
die ersten offenen Feinschnitte (53) und die zweiten offenen Feinschnitte (54) jeweils einen schrägen Teil (46a) umfassen, der mit Bezug auf die axiale Richtung des Reifens geneigt ist,
der schräge Teil (46a) jedes ersten offenen Feinschnitts (53) entgegengesetzt zu dem schrägen Teil (46a) des in Umfangsrichtung benachbarten ersten offenen Feinschnitts (53) geneigt ist, und
der schräge Teil (46b) jedes zweiten offenen Feinschnitts (54) in die gleiche Richtung wie der schräge Teil (46b) des in Umfangsrichtung benachbarten zweiten offenen Feinschnitts (54) geneigt ist.

## Revendications

1. Bandage pneumatique pour poids-lourds doté, dans une portion formant bande de roulement (2), de rainures principales d'épaulement (3) s'étendant en continu dans la direction circonférentielle du pneumatique dans une forme en zigzag sur le côté de bordure de la bande de roulement, et d'une rainure principale centrale (4) s'étendant en continu dans la direction circonférentielle du pneumatique dans une forme en zigzag sur l'intérieur en sens axial des rainures principales d'épaulement (3) de manière à définir des régions en relief d'épaulement (11) axialement à l'extérieur des rainures principales d'épaulement (3) et des régions en relief médianes (10) entre les rainures principales d'épaulement (3) et la rainure principale centrale (4),
les régions en relief d'épaulement (11) comprennent des blocs d'épaulement (40) divisés par des rainures annexes d'épaulement (37) s'étendant en continu dans la direction circonférentielle du pneumatique et ayant une largeur de rainure inférieure à celle des rainures principales d'épaulement (3), et des rainures latérales d'épaulement (35) s'étendant dans la direction axiale du pneumatique,
les régions en relief médianes (10) comprennent des blocs médians (16) divisés par des rainures annexes médianes (14) s'étendant en continu dans la direction circonférentielle du pneumatique et ayant une largeur de rainure inférieure à celle des rainures principales d'épaulement (3), et des rainures latérales médianes (15) s'étendant dans la direction axiale du pneumatique,
l'un au moins des blocs d'épaulement (40) et l'un au moins des blocs médians (16) sont divisés chacun par deux fentes de subdivision (25) s'étendant à travers le bloc (40, 16) dans la direction axiale du pneumatique en formant une pièce de bloc centrale (30) et une paire de pièces de blocs extérieures (31) sur les deux côtés de celle-ci dans la direction circonférentielle du pneumatique, et
chacune des pièces de blocs extérieures (31) des blocs d'épaulement (40) est pourvue d'une fente ouverte (45) dont au moins une extrémité est connectée à la rainure principale d'épaulement (3) ou à la rainure annexe d'épaulement (37),
**caractérisé en ce que**
chacune des pièces de blocs extérieures (31) des blocs médians (16) est pourvue d'une fente fermée (33) dont les deux extrémités se terminent à l'intérieur de la pièce de bloc extérieure concernée (31),
la fente fermée (33) a une partie oblique (34) inclinée par rapport à la direction axiale du pneumatique, et une paire de parties extérieures (36) qui continuent depuis les deux extrémités dans la direction axiale du pneumatique de la partie oblique (34),
un angle (θ3) de la partie oblique (34) par rapport à la direction axiale du pneumatique n'est pas inférieur à 15° et n'est pas supérieur à 25°.

2. Bandage pneumatique pour poids-lourds selon la revendication 1,
dans lequel la fente de subdivision (25) comprend, dans une section transversale perpendiculaire à sa direction en longueur, une portion principale (27) s'étendant dans la direction radiale du pneumatique avec une largeur constante (w7) à l'exclusion d'une partie inférieure, et une portion ouverte (28) dont la largeur (w8) augmente sous la forme d'un gradin sur l'extérieur de la portion principale (27) dans la direction radiale du pneumatique.

3. Bandage pneumatique pour poids-lourds selon la revendication 1 ou 2, dans lequel la rainure annexe d'épaulement (37) s'étend dans une forme en zigzag, et la rainure annexe médiane (14) s'étend sous une forme rectiligne.

4. Bandage pneumatique pour poids-lourds selon l'une quelconque des revendications 1 à 3, dans lequel les blocs d'épaulement (40) incluent des premiers blocs d'épaulement (41) définis entre les rainures principales d'épaulement (3) et les rainures annexes d'épaulement (37), et des seconds blocs d'épaulement (42) définis axialement à l'extérieur des rainures annexes d'épaulement (37),
les fentes ouvertes (45) incluent des premières fentes ouvertes (53) disposées sur les premiers blocs d'épaulement (41) et connectées aux rainures auxiliaires d'épaulement (37), et des secondes fentes ouvertes (54) disposées sur les seconds blocs d'épaulement (42) et connectées aux rainures auxiliaires d'épaulement (37), et
les secondes fentes ouvertes (54) continuent en douceur vers les premières fentes ouvertes (53) à travers les rainures annexes d'épaulement (37).

5. Bandage pneumatique pour poids-lourds selon la revendication 4, dans lequel
les premières fentes ouvertes (53) sont agencées à intervalles dans la direction circonférentielle du pneumatique et les secondes fentes ouvertes (54) sont agencées à intervalles dans la direction circonférentielle du pneumatique,
les premières fentes ouvertes (53) et les secondes fentes ouvertes (54) comprennent chacune une partie oblique (46a) inclinée par rapport à la direction axiale du pneumatique,
la partie oblique (46a) de chaque première fente ouverte (53) est inclinée en sens opposé à la partie oblique (46a) de la première fente ouverte circonférentiellement adjacente (53), et
la partie oblique (46b) de chaque seconde fente ouverte (54) est inclinée vers la même direction que la partie oblique (46b) de la seconde fente ouverte circonférentiellement adjacente.
